# EUROPÄISCHE PATENTSCHRIFT

(11) **EP 1 731 432 B1**
(45) Veröffentlichungstag und Bekanntmachung des Hinweises auf die Patenterteilung: **17.06.2009**
(21) Anmeldenummer: 06008708.7
(22) Anmeldetag: 26.04.2006
(51) Int. Cl.: B65B 51/04, A22C 11/00

(54) **Clipmaschine und Verfahren zum Einrichten einer Clipmaschine**
Clipping machine and method of setting-up a clipping machine
Machine de remplissage et méthode d'établissement cette machine

(30) Priorität: 07.06.2005 DE 102005026219
(43) Veröffentlichungstag der Anmeldung: 13.12.2006
(73) Patentinhaber: Poly-clip System GmbH & Co. KG, 60489 Frankfurt am Main (DE)
(72) Erfinder: Meyrahn, Joachim, Dr., 64390 Erzhausen (DE); Ebert, Detlef, 61231 Nauheim (DE)
(74) Vertreter: Fritsche, Rainer

(56) Entgegenhaltungen:
- EP-A- 0 268 206
- DE-U- 1 933 066
- GB-A- 1 179 624
- US-B1- 6 298 635

## Beschreibung

Die Erfindung betrifft eine Clipmaschine mit zwei Verschließwerkzeugen, die zum Verschließen von Verschlusselementen (Clips) relativ zueinander zwischen einer Öffnungsstellung und einer Verschließstellung bewegbar sind, und mit Einstellmitteln, eingerichtet zum Einstellen der Ruhelage eines Verschließwerkzeugs und somit des Abstands der Verschließwerkzeuge insbesondere in ihrer Verschlussstellung (Verschlussabstand). Die Erfindung betrifft ferner ein Verfahren zum Einrichten einer solchen Clipmaschine.

Mit Clipmaschinen der genannten Art werden typischerweise mit flüssigem bis zähpastösem oder auch (teilweise) granularem Inhalt befüllte Beutel oder schlauchförmige Verpackungen (Schlauchhülle oder Darm) verschlossen. Zunächst wird bei diesem Vorgang das Füllgut in die Verpackung eingebracht und im Fall einer schlauchförmige Verpackung danach mittels Verdrängelementen in Portionen abgeteilt. Die Verdrängelemente schnüren dazu die Schlauchhülle in radialer Richtung ein und verdrängen das in dem Einschnürbereich befindliche Füllgut in axialer Richtung - bezogen auf die Schlauchachse. Im Einschnürbereich wird so ein Schlauchzopf gebildet. Auf den gebildeten Schlauchzopf werden im nächsten Arbeitstakt ein oder im Fall einer Doppelclipanordnung zwei Verschlusselemente mittels der zwei (bzw. vier) gegeneinander bewegten Verschließwerkzeuge aufgebracht. Die Verschließwerkzeuge umfassen paarweise jeweils einen Stempel und eine Matrize, zwischen welchen der Clip während des Verschließens bis zum Erreichen der Verschlussstellung (Umkehrpunkt der Bewegung) umgeformt wird. Nach dem Verschließen werden die Verschließwerkzeuge in ihre Ausgangs- oder Öffnungsstellung zurückbewegt.

An die Qualität eines solchen Verschlusses werden hohe Anforderungen gestellt. Einerseits darf er nicht so fest sein, dass die Verpackungshülle beim Verschließen beschädigt wird. Andererseits muss der Verschluss aber ausreichend dicht sein, so dass beispielsweise bei nachfolgender Behandlung der verschlossenen Wurst (Garen, Räuchern, etc.) diese nicht von der Verpackungshülle abrutscht.

Wenn die Clipmaschine für eine Vielzahl von verschiedenen Wurstprodukten und Verpackungshüllen eingesetzt wird, kommen unterschiedliche Clips zum Einsatz, die sich sowohl in ihrer Festigkeit als auch in ihrer Größe (Schenkellänge und Materialstärke) unterscheiden. Entsprechend muss der Verschlussabstand angepasst werden, da dieser für das Maß, auf das das Verschlusselement beim Verschließen zusammengedrückt wird - im Folgenden Klammerhöhe genannt - maßgebend ist. Dazu wird bekanntermaßen die Ruhelage wenigstens eines der Verschließwerkzeuge verändert. Dies geschieht zunächst empirisch. Dabei wird jedoch nicht selten die erforderliche Genauigkeit nicht erreicht. Die Benutzer solcher Verschließmaschinen prüfen dabei die Festigkeit des Verschlusses in der Regel manuell und damit sehr subjektiv. Sehr häufig wird die erforderliche Verschlussklammerhöhe dadurch unterschritten, um sicherzustellen, dass der Verschluss sicher auf der Verpackungshülle hält. Dadurch wird jedoch die Verschließmaschine u. U. mechanisch weit höher beansprucht, als eigentlich erforderlich wäre, was zu einem erhöhten Verschleiß oder gar zu einer Beschädigung der Maschine führen kann. Ferner droht die Gefahr, dass die Verpackungshülle in dem ein oder anderen Fall beim Verschließen beschädigt wird und das Füllgut austreten oder verderben kann.

Ist die Einstellung dennoch auf diese Weise für einen Produkttyp und/oder eine Clipgröße einmal vorgenommen, wird anhand einer an der Clipmaschine angebrachten Skala der Wert für die Klammerhöhe zukünftig reproduziert. Eine derartige Clipmaschine ist im Form eines Tischgeräts aus der DE-U-1933066 bekannt. Jedoch kann es insbesondere beim Reproduzieren der Einstellung leicht zu weiteren Fehlmanipulationen und damit immer wieder zu unzureichenden Verschlussfestigkeiten, erhöhtem Verschleiß und Beschädigungen an der Clipmaschine kommen.

Da die Verschließwerkzeuge beim Verschließen eines Clips mit Verschlusskräften mehrer tausend Newton (bis zu 15 kN) aufeinander zu bewegt werden, ist ferner mit einem gewissen Verschleiß an allen bewegten Teilen zu rechnen. Das dadurch entstehende Spiel bleibt beim Einstellen des Verschlussabstands mit Hilfe der Skala an der Verschließmaschine unberücksichtigt. Neben der Gefahr einer Fehlmanipulation kann dies zur Folge haben, dass der Skalenwert nicht länger dem tatsächlichen Verschlussabstand und damit auch die tatsächlich resultierende Klammerhöhe nicht mehr der empirisch ermittelten Verschlussfestigkeit entspricht.

Die Benutzer solcher Verschließmaschinen sind somit gezwungen, die Festigkeit des Verschlusses regelmäßig wiederholt zu prüfen und gegebenenfalls zu korrigieren.

Um diesen Missständen entgegenzuwirken ist aus der EP 0 467 020 A1 eine Druckbegrenzungsvorrichtung für eine solche Clipmaschine bekannt, bei der mittels einer Tauchkolbenanordnung und einem Druckspeicher bei Überschreiten einer voreingestellten Verschlusskraft der Stempel entlastet wird. Dies sorgt zwar für eine verminderte Gefahr der Beschädigung an der Clipmaschine und an der Wursthülle, kann aber nicht sicherstellen, dass der Clip bis auf eine ausreichende Cliphöhe verschlossen wird.

Aus der EP 0 900 733 A1 ist wiederum eine Clipmaschine bekannt, die einen Distanzsensor zum Erfassen des Verschlussabstands mit bezüglich der Verschließwerkzeuge ortsfest angeordnetem Distanzsensor und Referenzfläche aufweist. Dies ermöglicht, dass tatsächlich eine der Verschlussklammerhöhe entsprechende Größe erfasst werden kann. Jedoch schließt auch diese Überwachung eine Fehlmanipulation nicht aus. Sollte beispielsweise für einen bestimmten Clip ein falscher Verschlussabstand ausgewählt worden sein oder sich auf Grund einer Fehlfunktion ein Clip aus einem vorhergehenden Verschließvorgang noch zwischen den Verschließwerkzeugen befinden, so kann die Messung des Verschlussabstands der Verschließwerkzeuge die Gefahr einer Fehlfunktion oder gar Beschädigung der Verschließmaschine oder des zu verschließenden Produkts bzw. der Verpackungshülle nicht verhindern.

Aufgabe der vorliegenden Erfindung ist es deshalb, eine Clipmaschine und ein Verfahren zum Einrichten der Clipmaschine dahingehend zu verbessern, dass die Gefahr einer Fehlmanipulation und/oder einer Fehlfunktion vermindert und somit das Verschließen eines Clips um die Verpackungshülle prozesssicherer gestaltet wird.

Die Aufgabe wird erfingdungsgemäß durch eine Clipmaschine der Eingangs genannten Art mit den Merkmalen des kennzeichnenden Teils des Anspruchs 1 und durch ein Verfahren mit den Merkmalen des Anspruchs 10 gelöst.

Der Erfindung liegt die Erkenntnis zu Grunde, dass keine der bekannten Clipmaschinen eine Aussage über die tatsächlich aufgebrachte Verschlusskraft und damit die Festigkeit des Verschlusses zulässt. Somit ist bei den bekannten Clipmaschinen keine Rückkopplung hinsichtlich der Richtigkeit des eingestellten Verschlussabstands möglich. Die erfindungsgemäße Clipmaschine weist deshalb eine Messeinrichtung auf, mit der die beim Verschließen eines Clips aufgebrachte Verschlusskraft entweder unmittelbar oder eine dieser Verschlusskraft proportionale Größe gemessen werden kann. Anhand eines entsprechenden Messwerts kann dann eine Rückkopplung erfolgen, die die notwendige Genauigkeit bei der Einstellung des Verschlussabstands ermöglicht.

Dies geschieht gemäß einer vorteilhaften Weiterbildung der Clipmaschine, die einen Ereignisdatenspeicher und eine Steuerung aufweist, welche eingerichtet ist, den Messwert mit einem ersten ausgewählten Wertebereich zu vergleichen und das Ereignis in dem Ereignisdatenspeicher zu protokollieren, wenn der Messwert den ersten ausgewählten Wertebereich verlässt. Hierdurch ist es möglich Abweichungen der Verschlusskraft im laufenden Betrieb oder auch nachträglich aus dem Speicher auszulesen, und Rückschlüsse auf eine Fehlbedienung, wie falsch eingestellte Klammerhöhen, oder eine Fehlfunktion ziehen zu können. Dies ermöglicht unter anderem dem Hersteller der Clipmaschine ein schnelleres Auffinden der Ursachen für eine Betriebsstörung oder einen Defekt an der Maschine.

Besonders bevorzugt weist die Clipmaschine alternativ oder zusätzlich einen mit den Einstellmitteln gekoppelten Verstellantrieb auf, wobei die Steuerung eingerichtet ist, den Messwert mit einem zweiten ausgewählten Wertebereich zu vergleichen und ein Steuersignal zum Einstellen der Ruhelage des Verschließwerkzeugs bzw. der des Verschlussabstands an den Verstellantrieb auszugeben, wenn der Messwert den zweiten ausgewählten Wertebereich verlässt. Hierdurch ergibt sich eine Rückkopplung, die für eine automatisch geregelte Nachstellung des Verschlussabstands sorgt, sollte dieser Eingangs falsch eingestellt worden sein oder sich im Laufe der Produktion verstellt haben.

In einer weiteren vorteilhaften Ausführungsform der erfindungsgemäßen Clipmaschine ist die Steuerung alternativ oder zusätzlich eingerichtet, den Messwert mit einem dritten ausgewählten Wertebereich zu vergleichen und die Clipmaschine anzuhalten, wenn der Messwert den dritten ausgewählten Wertebereich verlässt. Diese Weiterentwicklung ist vor allen Dingen dann von großem Nutzen, wenn beispielsweise auf Grund einer Störung in der Produktion ein Clip aus einem vorausgehenden Clipvorgang noch zwischen den Verschließwerkzeugen zurückgeblieben ist und sich auf diese Weise ein Clipstau zwischen den Verschließwerkzeugen bildet. Ein Anhalten der Maschine ― gegebenenfalls unter Ausgabe eines Hinweissignals auf die Ursache der Störung ― kann dann dazu dienen, die Ursache, d.h. den Clipstau, zu beseitigen.

Das Protokollieren, Einstellen und/oder Anhalten kann beispielsweise bei einmaligem Über- bzw. Unterschreiten der den jeweiligen ausgewählten Wertebereich definierenden Grenzwerte erfolgen, bei mehrmaligem Verlassen des entsprechenden Wertebereichs in Folge oder bei wiederkehrendem Verlassen des entsprechenden Wertebereichs über einen vorbestimmten Zeitraum.

In einer besonders bevorzugten Weiterentwicklung weist die Clipmaschine mit dem einstellbaren Verschließwerkzeug gekoppelten Positionssensor auf, der eingerichtet ist, einen Ruhepositionswert, welcher die Ruhelage des eingestellten Verschließwerkzeugs repräsentiert, zu erzeugen und auszugeben. Auf diese Weise kann zusätzlich zu der tatsächlich aufgebrachten Verschlusskraft auch der tatsächlich eingestellte Verschlussabstand überwacht werden. Dies hat den Vorteil, dass beispielsweise nach jedem Wechsel des verwendeten Clips auf einen bekannten Ruhepositionswert zurückgegriffen und die diesem entsprechende Ruhelage des Verschließwerkzeugs reproduziert werden kann. Dies stellt gegenüber dem bekannten Distanzsensor dahingehend eine Verbessung dar, als die Reproduktion der Einstellung nicht über den relativen Verschlussabstand der Verschließwerkzeuge sondern absolut und auch in der Öffnungsstellung erfolgen kann.

Vorzugsweise ist eine Anzeigeeinrichtung vorgesehen, die eingerichtet ist, das Ereignis anzuzeigen, wenn der Messwert den ersten und/oder zweiten und/oder dritten ausgewählten Wertebereich verlässt. Hierdurch wird den Bedienpersonal die Möglichkeit gegeben, einer akuten oder drohenden Fehlfunktion sofort entgegenzuwirken. Die Anzeigeeinrichtung kann das Ereignis sowohl in akustischer als auch optischer Weise oder in einer kombinierten Form zur Anzeige bringen.

Besonders bevorzugt weist die Messeinrichtung eine mit einem der Verschließwerkzeuge gekoppelte Feder, die beim Verschließen des Clips gegen die Verschlusskraft arbeitet, und eine mit dem Verschließwerkzeug gekoppelte Wegmesseinrichtung zur Messung des Federwegs beim Verschließen des Clips, auf. Hierbei wird die Wegmesseinrichtung besonders bevorzugt von dem mit dem einstellbaren Verschließwerkzeug gekoppelten Positionssensor zum Erzeugen und Ausgeben des Ruhepositionswerts gebildet, der ferner eingerichtet ist, einen den Federweg beim Verschließen des Clips repräsentierenden Auslenkungswert zu erzeugen und auszugeben. Auf diese Weise können der Positionssensor und die Messeinrichtung zur Messung der Verschlusskraft auf einfache Weise zusammengefasst werden, indem derselbe Positionssensor einerseits statisch zur Ermittlung der Ruhelage eines Verschließwerkzeugs und somit der Verschlussstellung und andererseits dynamisch zur Messung der Auslenkung der Feder beim Verschließen und somit der Verschlusskraft bzw. der dieser proportionalen Größe eingesetzt wird. Die Verschlusskraft kann beispielsweise über die gemessene Maximalauslenkung der Feder oder über eine differentielle Wegmessung erfolgen. Dabei kann die Auslenkung in einem näherungsweise linearen Bereich der Federkonstante direkt aus der Auslenkung oder genauer unter Berücksichtigung der Federkennlinie ermittelt werden.

Weitere Merkmale und Vorteile der erfindungsgemäßen Clipmaschine ergeben sich aus den Unteransprüchen. Diese werden unter Bezugnahme auf die beigefügten Figuren in der nachfolgenden Beschreibung eines Ausführungsbeispiels erläutert. Es zeigen:
- Fig. 1: einen Ausschnitt aus einem Ausführungsbeispiel der erfindungsgemäßen Clipmaschine;
- Fig.2: eine Schemadarstellung der Steuerung eines Ausführungsbeispiels der erfindungsgemäßen Clipmaschine; und
- Fig. 3: ein Ablaufschema des Verschließvorgangs und des erfindungsgemäßen Einrichtverfahrens der Clipmaschine.

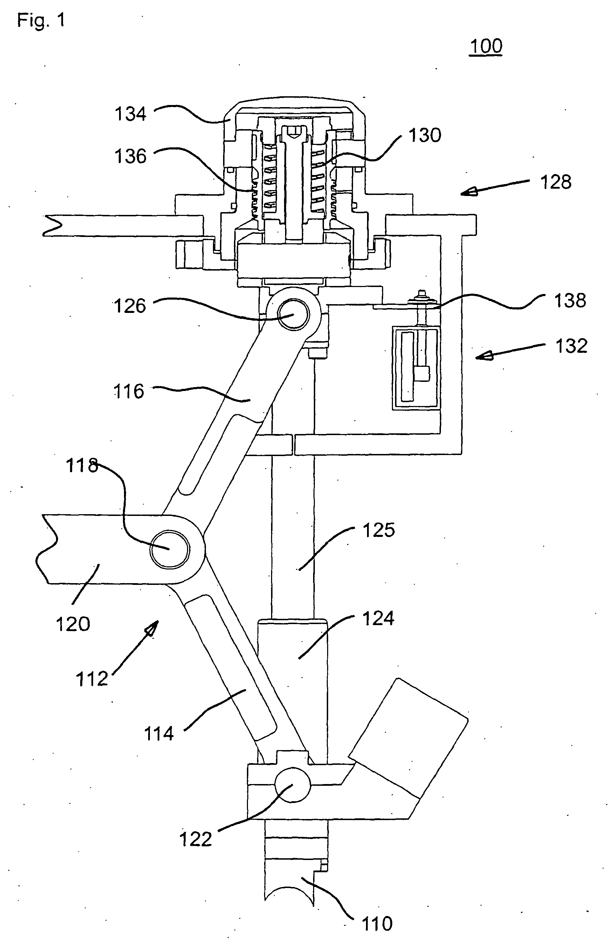

Der Ausschnitt gemäß Fig. 1 zeigt ein erstes zweier Verschließwerkzeuge eines Ausführungsbeispiels der erfindungsgemäßen Clipmaschine 100, in diesem Fall einen Stempel 110. Der Stempel 110 wird über eine Kniehebelanordnung 112 angetrieben. Die Kniehebelanordnung 112 weist einen ersten Hebel 114 und einen zweiten Hebel 116 auf, die ein gemeinsames Kniegelenk 118 bilden. Mit seinem dem Kniegelenk 118 fernen Ende ist der Hebel 114 an einem mit dem Stempel 110 ortsfest verbundenen Zapfen 122 angelenkt. Der zweite Hebel 116 ist mit seinem dem Kniegelenk 118 entgegengesetzten Ende an einem Gegenlager 126 angelenkt. Wenn das Kniehebelgelenk 118 durch eine über eine Koppelstange 120 eingeleitete Kraft gebeugt bzw. gestreckt wird, bewegt sich der Stempel zwischen einer oberen Öffnungsstellung und einer unteren Verschlussstellung auf und ab. Dabei wird der an einem Stempelträger 124 befestigte Stempel 110 teleskopartig durch eine Zylinderführung 125 geführt, welche fest mit dem nicht dargestellten Maschinengehäuse verbunden ist.

In der Verschlussstellung ist der Stempel dem zweiten Verschließwerkzeug (dann eine Matrize, nicht dargestellt) bis auf einen minimalen Verschlussabstand angenähert. Wird die Kniehebelanordnung 112 gestreckt und somit der Stempel in die Verschlussstellung gebracht, wird die zum Verformen und Verschließen eines Clips aufgebrachte Kraft also über das Gegenlager 126 abgeleitet.

Das Gegenlager 126 ist wiederum mit der erfindungsgemäßen Messeinrichtung 128 zum Messen der beim Verschließen des Clips aufgebrachten Verschlusskraft fest verbunden. Somit ist die Messeinrichtung 128 über das Gegenlager 126 und die Kniehebelanordnung 112 mit dem Stempel 110 fest verbunden. Im Einzelnen weist die Messeinrichtung 128 eine Feder 130 und einen Positionssensor 132 auf, die jeweils auf diese Weise mit dem Stempel 110 gekoppelt sind. Die Feder 130 ist eine Druckfeder, die an ihrem dem Gegenlager 126 entgegengesetzten Ende gegen ein Gehäuse 134 abgestützt ist, welches ortsfest an dem Maschinengehäuse (nicht gezeigt) der Clipmaschine 100 fixiert ist.

Die beim Verschließen eines Clips aufgebrachte Verschlusskraft wird in dem gezeigten Ausführungsbeispiel über die Kniehebelanordnung 112, das Gegenlager 126 und die Feder 130 auf das Gehäuse 134 abgeleitet. Dabei wird die Feder 130 um ein von der Verschlusskraft abhängiges Maß komprimiert. Dieser Federweg kann - in einem bestimmten Rahmen - proportional linear und/oder darüber hinaus nicht linear von der Verschlusskraft abhängen. In dem Bereich, in dem die Federauslenkung nicht mehr proportional zur aufgebrachten Verschlusskraft ist, kann dann aber eine Korrektur des ausgegebenen Messwerts anhand einer Federkennlinie vorgenommen werden.

Dem Federweg entsprechend entfernt sich eine ebenfalls mit dem Gegenlager 126 ortsfest verbundene Referenzfläche 138 aufwärts von einem korrespondierenden Abstandsdetektor eines aus beiden Elementen (Referenzfläche und Abstandsdetektor) gebildeten Positionssensors 132 weg, da der Abstandsdetektor seinerseits über die Zylinderführung 125 ortsfest dem Maschinengehäuse der Clipmaschine verbunden ist. Durch die Messung des sich ändernden Abstandes zwischen Referenzfläche 138 und Abstandsdetektor aufgrund der Komprimierung der Feder 130 dient der Positionssensor 132 somit der Bestimmung des Federwegs während des Verschließens eines Clips. Selbstverständlich kann die Zuordnung von Abstandsdetektor und Referenzfläche zu den ortfesten Maschinenteilen bzw..zu den beweglichen, mit dem Verschlusswerkzeug gekoppelten Teilen auch umgekehrt sein.

Der Positionssensor 132 kann beispielsweise auf einem magnetischen Abtastsystem, bei dem ein mit der Referenzfläche verbundener magnetischer Maßstab von einem Magnetsensor ausgelesen wird, gebildet werden. Auch Ortsensoren, die auf einem optischen Abtastsystem, bei dem ein Maßstab optisch ausgelesen wird, einem optisch-interferometrischen Messsystem oder einem akustischen Messsystem basieren, können hier zum Einsatz kommen.

Der Positionssensor 132 dient aber nicht nur zur Bestimmung des Federwegs sondern zugleich auch der Bestimmung der Ruhelage des Verschließwerkzeugs (in diesem Fall. des Stempels). Diese kann nämlich mittels Einstellmitteln, hier mittels einer Spindelverstellung 136, eingestellt werden. Die Spindelverstellung 136 verbindet das Federgehäuse 134 mit dem Gegenlager 126 und ermöglich durch Drehung eine axiale Verstellung des Gegenlagers 126 und somit auch des Stempels 110 in seiner Ruhelage gegenüber dem Federgehäuse 134 und dem Maschinengehäuse. Dadurch kann insbesondere die Verschlussstellung bei gestrecktem Kniehebel 112 und damit der Verschlussabstand zwischen den Verschließwerkzeugen verstellt werden. Gleichzeitig sorgt die Verstellung des Gegenlagers 126 für eine Änderung des Abstands zwischen den Abstandssensor 132 und der Referenzfläche 138, was eine absolute (Ruhe-)Positionsbestimmung ermöglicht.

Alternativ können die Einstellmittel beispielsweise bei einer ähnlichen Kniehebelanordnung als veränderliche (z.B. verschiebbare oder exzentrisch verstellbare) Anlenkpunkte des Kniehebels entweder an dem Gegenlager oder an dem Verschließwerkzeug ausgebildet sein. Auch wäre es denkbar, die Hebel der Kniehebelanordnung in sich längenverstellbar auszubilden. Alle diese Prinzipien sind ohne weiteres auch auf Clipmaschinen übertragbar, die zur Einleitung der Verschlusskraft ohne eine (Knie-) Hebelanordnung auskommen.

Die Verstellung der Ruhelage und somit des Verschlussabstands kann entweder händisch oder motorisch erfolgen. Eine motorischen Verstellung mittels eines Verstellantriebs (nicht gezeigt) weist den Vorteil auf, dass der mittels der Messeinrichtung 128 ermittelte, die Verschlusskraft repräsentierende Messwert zum automatischen Ein- bzw. Nachstellen der Ruhelage und somit des Verschlussabstands in einem Regelkreis genutzt werden kann.

Die Integration der Messeinrichtung für die Verschlusskraft in den Positionssensor 132 spart Kosten und Platz. Die Überwachung der Ruhelage durch den Positionssensor 132 ermöglicht ferner bereits vor dem Verschließen des ersten Clips eine Plausibilitätsüberprüfung des eingestellten Ruhepositionswerts, welcher die Ruhelage des eingestellten Verschließwerkzeugs repräsentiert, wenn beispielsweise in einer Produktdatenbank für ein bestimmtes ausgewähltes Produkt ein Sollwert oder -wertebereich hierfür abgelegt ist. Diese Plausibilitätsprüfung durch Vergleich des tatsächlich ermittelten Ruhepositionswerts mit dem Sollwert kann dann beispielsweise zur Anzeige gebracht werden oder zur Rückkopplung für den Verstellantrieb dienen. Diese statische Positionsüberwachung ergänzt die erfindungsgemäße dynamische Verschlusskraftüberwachung. So kann beispielsweise ein weiterer Vergleich vorsehen, den ersten und/oder zweiten und/oder dritten Wertebereich für den ermittelten Messwert der Verschlusskraft in Abhängigkeit von dem Soll-Ruhepositionswert oder dem Ist-Ruhepositionswert auszuwählen.

Da die Messung der Verschlusskraft während des Verschließvorgangs dynamisch und in Echtzeit erfolgt, kann die Verschlusskraft bei jedem einzelnen Verschließvorgang und zu jeder Zeit genau ermittelt und sofort auf einer Unregelmäßigkeit reagiert werden. Zunächst kann die Produktdatenbank ferner einen Sollwertebereich für den Maximalwert des Federwegs definieren, der mit dem tatsächlich ermittelten Federweg verglichen wird. Das Ergebnis kann dann zur Anzeige gebracht werden und durch manuelles oder automatisches Nachstellen der Ruhelage die gewünschte Verschlusskraft und damit eine konstante Cliphöhe eingestellt werden.

Die Messeinrichtung 128 zum Messen der Verschlusskraft erlaubt ferner eine einfache Fehlerdiagnose. Beispielsweise kann ein Federbruch der mit dem Verschließwerkzeug 110 gekoppelten Feder 130 sofort festgestellt werden. Der Stempel 110 erfährt bei einem Federbruch über die Kniehebelanordnung nämlich über eine gewisse Strecke im Bereich des Federbruchs keine Abstützung mehr, was eine signifikant größere Auslenkung des Positionssensor 132 zur Folge hat, als dies bei intakter Feder der Fall wäre.

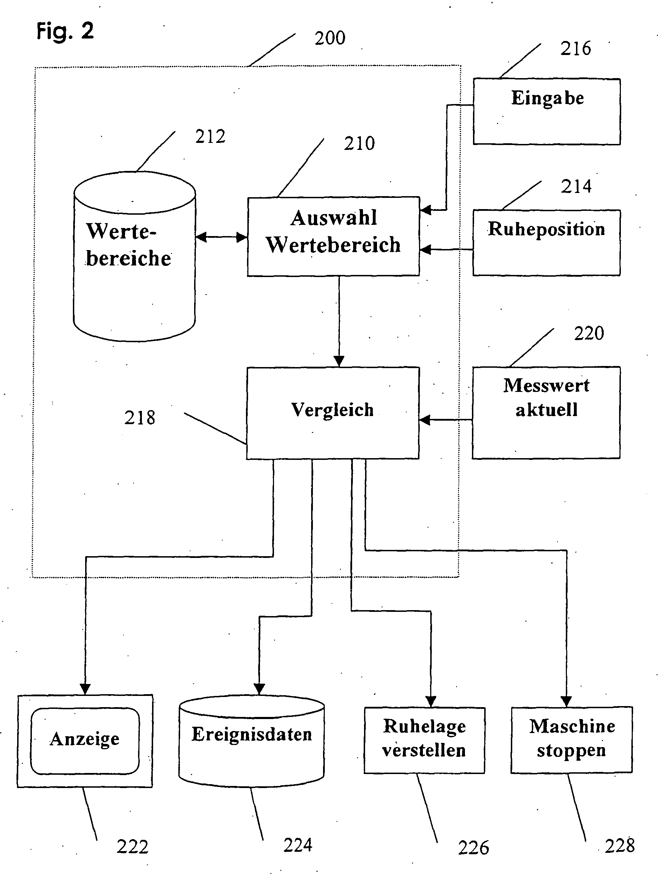

Die schematische Darstellung der Fig. 2 zeigt eine beispielhafte Steuerung 200 für die erfindungsgemäßen Clipmaschine, welche eine Auswahleinrichtung 210 für die Wertebereiche sowie eine Datenbank 212 für die Wertebereiche aufweist. Die Auswahl eines bzw. mehrerer Wertebereiche aus der Datenbank geschieht in Abhängigkeit von dem vom Positionssensor 214 ausgegebenen Ruhepositionswert und/oder anhand einer eingelesenen Produktinformation. Die Produktinformation kann beispielsweise vor Beginn der Produktion manuell über eine Eingabeeinheit 216 unmittelbar eingegeben werden. Alternativ kann die Produktinformation auch aus einer Produktinformationsdatenbank (nicht gezeigt) automatisch eingelesen werden.

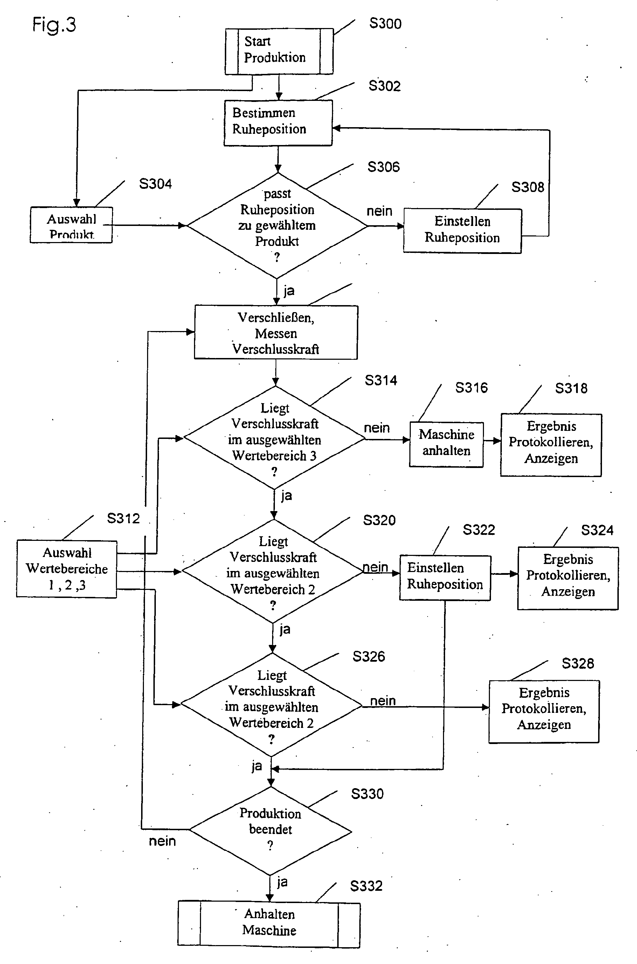

Nachdem die Auswahleinrichtung 210 eine Auswahl für den oder die Wertebereiche getroffen hat, wird mittels einer Vergleichseinrichtung 218 der Steuerung 200 ein Vergleich des oder der Wertebereiche mit dem von der Messeinrichtung 220 ausgegebenen Messwert, welcher die beim Verschließen eines Clips aufgebrachten Verschlusskraft oder eine dieser proportionale Größe repräsentiert, verglichen. Die Vergleichseinheit 218 gibt dann einen Befehl an eine Anzeigeeinrichtung 222 zum Anzeigen des Ereignisses und/oder an einen Ereignisdatenspeicher 224 zum Protokollieren des Ereignisses und/oder an einen Verstellantrieb 226 zum Ein- bzw. Nachstellen der Ruhelage und/oder an eine Hauptmaschinensteuerung 228 zum Anhalten der Clipmaschine aus. Die Auswahl, an welche der Komponenten 222, 224, 226 und 228 ausgegeben wird, trifft die Vergleichseinrichtung 218 anhand des Vergleichs des von der Messeinrichtung 220 erhaltenen Messwerts mit mehreren Wertebereichen, wie beispielhaft anhand der Fig. 3 erläutert wird. Die Wertebereiche sind typischerweise unterschiedlich, können aber auch teilweise oder vollständig deckungsgleich sein.

Die Anzeigeeinrichtung 222 zeigt das Ereignis an. Dies kann bevorzugt optisch, aber auch oder zusätzlich akustisch geschehen. Vorteilhafterweise bietet sich hierzu ein Display oder Bildschirm in Kombination mit einem akustischen Warnsignal an.

Anhand Fig. 3 soll nun ein Ausführungsbeispiel des erfindungsgemäßen Verfahrens zum Einrichten einer Clipmaschine erläutert werden.

Mit jedem Produktionsstart S300 beginnt die Initialisierung der Clipmaschine, welche u. a. das erfindungsgemäße Einrichtverfahren beinhaltet. Zugleich wird mit der Initialisierung eine Produktauswahl getroffen S304. Das Einrichtverfahren beginnt mit dem Bestimmen der Ruheposition S302 mittels des mit einem einstellbaren Verschließwerkzeug gekoppelten Positionssensors, der einen Ruhepositionswert, welcher die Ruhelage des oder der eingestellten Verschließwerkzeuge repräsentiert, erzeugt und ausgibt. Anhand der Produktsauswahl wird in einem nächsten Verfahrensschritt S306 geprüft, ob der bestimmte Ruhepositionswert zu dem ausgewählten Produkt passt. Ist dies nicht der Fall, wird die Ruheposition im Verfahrensschritt S308 eingestellt. Das Einstellen kann entweder manuell geschehen, indem ein Bediener beispielsweise manuell an einer Spindelverstellung dreht und dabei die Ist-Position oder die Abweichung von der Soll-Position auf eine Anzeige abliest. Eine Alternative sieht vor, dass ein Schrittmotor als Antrieb für die Verstellung entsprechend der Differenz zwischen Ist- und SollPosition angesteuert wird. Gemäß einer weiteren Alternative kann ein beliebiger motorischer Antrieb über den quasi permanent abgegriffenen Ruhepositionswert geregelt sein, so dass er das Verschließwerkzeug in die gewünschte SollPosition fährt, die zu dem gewählten Produkt passt.

Ist der gewünschte Ruhepositionswert erreicht, wird mit dem ersten (und bei jedem weiteren) Verschlussvorgang die Verschlusskraft gemessen S310. Die gemessene Verschlusskraft wird mit einem zuvor im Schritt S312 ausgewählten Wertebereich, welcher anhand der im Schritt S304 getroffenen Produktauswahl ermittelt wird, in der Abfrage S314 verglichen. Ergibt der Vergleich, dass die gemessene Verschlusskraft außerhalb des ausgewählten Wertebereichs 3 liegt, wird die Clipmaschine im Schritt S316 angehalten und im Schritt 318 das Ereignis protokolliert und/oder angezeigt.

Liegt die gemessene Verschlusskraft in dem ausgewählten Wertebereich 3, wird in einem nächsten Schritt S320 die Verschlusskraft mit einem zweiten ausgewählten Wertebereich verglichen. Ergibt der Vergleich, dass die Verschlusskraft außerhalb des Wertebereichs 2 liegt, wird die Ruheposition im Schritt S322 nachgestellt und im Schritt S324 das Ereignis protokolliert und/oder angezeigt.

Ergibt die Überprüfung im Schritt S320, das die gemessene Verschlusskraft auch innerhalb des ausgewählten Wertebereichs 2 liegt, wird in einem nächsten Schritt S326 überprüft, ob sie in einem ersten ausgewählten Wertebereich liegt. Trifft dies nicht zu, so wird das Ereignis in Schritt S328 protokolliert und/oder angezeigt.

Das Ereignisprotokoll kann in jedem der Schritte S318, S324 und S328 sowohl Informationen über die Produktauswahl, die eingestellte bzw. bestimmte Ruheposition, den ausgewählten Wertebereich für die Verschlusskraft als auch die gemessene Verschlusskraft und die erfolgte Aktion beinhalten.

Ergibt die Prüfung in Schritt S326 hingegen, dass die gemessene Verschlusskraft auch im ausgewählten Wertebereich 1 liegt, wird im nächsten Schritt S330 abgefragt, ob die Produktion beendet ist und/oder ob zwischenzeitlich ein manueller Befehl zum Anhalten der Maschine erfolgt ist. Dieselbe Abfrage, ob die Produktion beendet oder ein Stoppbefehl ergangen ist, in Schritt S330 erfolgt auch auf den Schritt S322 des Einstellens der Ruheposition, wenn die gemessene Verschlusskraft außerhalb des ausgewählten Wertebereichs 2 liegt. Trifft dies zu, so wird im Schritt S332 die Maschine angehalten. Andernfalls wird mit Schritt 310 der nächste Verschlusszyklus in Gang gesetzt.

Bei dem in Fig. 3 gezeigten Ausführungsbeispiel sind die Wertebereiche so gestaffelt, dass bei Über- bzw. Unterschreiten erster Grenzwerte dies lediglich protokolliert und/oder zur Anzeige gebracht wird, um beispielsweise einen Hinweis auf eine mögliche Fehlerquelle zu erhalten, deren Auswirkungen jedoch im Hinblick auf den Verschleiß der Clipmaschine und die Haltbarkeit des erzielten Verschlusses hinnehmbar ist. Über- bzw. unterschreitet die Verschlusskraft zweite, in der Regel einen größeren Wertebereich aufspannenden Grenzwerte, so wird die Ruheposition nachgestellt, um die Verschlusskraft wieder in einen akzeptablen Wertebereich zu bringen. Ob die Verstellung der Ruheposition ausreichend war, wird beim nächsten Verschlusszyklus durch erneutes. Messen der Verschlusskraft überprüft. Auf diese Weise wird ein geschlossener Regelkreis erzeugt. Sollte die Verschlusskraft allerdings außerhalb eines noch weiteren dritten Wertebereichs liegen, was in der Regel infolge einer Fehlfunktion oder grober Fehlbedienung auftritt, wird die Maschine sofort angehalten, um den Fehler beheben zu können, bevor die Produktion oder gar die Maschine Schaden nehmen kann.

Das Ablaufschema gemäß Fig. 3 stellt nur eine beispielhafte Ausführungsform dar. Die Anzahl der Wertebereiche kann reduziert oder auch erhöht werden. Es kann somit eine feinere Abstufung erfolgen. Die Wertebereiche können teilweise oder vollständig identisch sein. Der oder die Wertebereiche können anstelle von oder zusätzlich zu der im Schritt S304 getroffenen Produktauswahl anhand der in Schritt S302 bestimmten Ruheposition ausgewählt werden. Auch ist das erfindungsgemäße Einrichtverfahren S310 bis S328 nicht zwangsläufig in der in Fig. 3 dargestellten Weise in den Produktionsablauf eingebunden. Insbesondere ist möglich, verschiedene Zwischenschritte oder Unterprogramme in den dargestellten Verfahrensablauf, vor allem vor Schritt S310 und/oder nach den Schritten S326 und S328 zu integrieren. Es ist als optional zu verstehen, dass eine Produktauswahl gemäß Schritt S304 und eine Prüfung gemäß Schritt S306 stattfindet. Das Einstellen in Schritt S308 sowie das Nachstelllen in Schritt S322 der Ruheposition kann entsprechend manuell oder automatisch erfolgen. Beispielsweise kann auch vorgesehen sein, dass die Schritte S302 bis S308 zum Einstellen der Ruheposition nicht nach dem Produktionsstart sondern nach der Produktauswahl vorgenommen wird, welche unabhängig von einen Startsignal erfolgt.

Während das Ausführungsbeispiel gemäß Fig.. 1 ein verstellbares Verschließwerkzeug mit verbundener Messeinrichtung für die Verschlusskraft und mit verbundenem Positionssensor aufweist können auch beide Verschließwerkzeuge verstellbar gestaltet sein und/oder die Messeinrichtung und der Positionssensor separat ausgestaltet und auch jeweils an unterschiedlichen Verschließwerkzeugen angeordnet sein.

## Patentansprüche

1. Clipmaschine (100) mit zwei Verschließwerkzeugen, die zum Verschließen von Clips relativ zueinander zwischen einer Öffnungsstellung und einer Verschlussstellung bewegbar sind, mit Einstellmitteln (136), eingerichtet zum Einstellen der Ruhelage eines Verschließwerkzeugs (110) und somit des Abstandes der Verschließwerkzeuge (110) insbesondere in ihrer Verschlussstellung (Verschlussabstand), und
mit einer mit einem Verschließwerkzeug (110) verbundenen Messeinrichtung (128, 220), die eingerichtet ist, eine beim Verschließen eines Clips aufgebrachte Verschlusskraft oder eine zu dieser proportionale Größe zu messen und einen die Verschlusskraft oder die zu ihr proportionale Größe repräsentierenden Messwert auszugeben, **gekennzeichnet durch** einen mit dem einstellbaren Verschließwerkzeug (110) gekoppelten Positionssensor (132, 214), der eingerichtet ist, einen Ruhepositionswert, welcher die Ruhelage des eingestellten Verschließwerkzeugs repräsentiert, zu erzeugen und auszugeben.

2. Clipmaschine (100) nach Anspruch 1,
**gekennzeichnet durch** einen Ereignisdatenspeicher (224) und eine Steuerung (200), die eingerichtet ist, den Messwert mit einem zweiten ausgewählten Wertebereich zu vergleichen und das Ereignis in dem Ereignisdatenspeicher (224) zu protokollieren, wenn der Messwert den zweiten ausgewählten Wertebereich verlässt.

3. Clipmaschine (100) nach Anspruch 1 oder 2,
**gekennzeichnet durch** einen mit den Einstellmitteln (136) gekoppelten Verstellantrieb, wobei die Steuerung (200) eingerichtet ist, den Messwert mit einem ersten ausgewählten Wertebereich zu vergleichen und ein Steuersignal zum Einstellen der Ruhelage an den Verstellantrieb auszugeben, wenn der Messwert den ersten ausgewählten Wertebereich verlässt.

4. Clipmaschine (100) nach einem der Ansprüche 1 bis 3,
**dadurch gekennzeichnet, dass** die Steuerung (200) eingerichtet ist, den Messwert mit einem dritten ausgewählten Wertebereich zu vergleichen und die Clipmaschine anzuhalten, wenn der Messwert den dritten ausgewählten Wertebereich verlässt.

5. Clipmaschine (100) nach einem der Ansprüche 2 bis 4,
**dadurch gekennzeichnet, dass** die Steuerung (200) einen Datenspeicher (212) und eine Auswahleinrichtung (210) für die Wertebereiche aufweist.

6. Clipmaschine (100) nach Anspruch 5,
**dadurch gekennzeichnet, dass** die Auswahleinrichtung (210) eingerichtet ist, den ersten und/oder zweiten und/oder dritten Wertebereich in Abhängigkeit von dem Ruhepositionswert auszuwählen.

7. Clipmaschine (100) nach einem der Ansprüche 2 bis 6,
**gekennzeichnet durch** eine Anzeigeeinrichtung (222), die eingerichtet ist, das Ereignis anzuzeigen, wenn der Messwert den ersten und/oder zweiten und/oder dritten ausgewählten Wertebereiche verlässt.

8. Clipmaschine (100) wenigstens nach Anspruch 1,
**dadurch gekennzeichnet, dass** die Messeinrichtung (128, 220) eine mit einem der Verschließwerkzeuge (110) gekoppelte Feder (130), die beim Verschließen des Clips gegen die Verschlusskraft arbeitet, und eine mit dem Verschließwerkzeug (110) gekoppelte Weginesseinrichtung zur Messung des Federwegs beim Verschließen des Clips aufweist.

9. Clipmaschine (100) nach Anspruch 8,
**dadurch gekennzeichnet, dass** die Wegmesseinrichtung von dem mit dem einstellbaren Verschließwerkzeug (110) gekoppelten Positionssensor (132, 214) zum Erzeugen und Ausgeben des Ruhepositionswerts gebildet wird, der eingerichtet ist, einen den Federweg beim Verschließen des Clips repräsentierenden Auslenkungswert zu erzeugen und auszugeben.

10. Verfahren zum Einrichten einer Clipmaschine für das Verschließen von Clips mittels zweier Verschließwerkzeuge (110), die relativ zueinander zwischen einer Öffnungsstellung und einer Verschlussstellung bewegbar sind, mit den Schritten
Einstellen der Ruhelage eines Verschließwerkzeugs (110) und somit des Abstandes der Verschließwerkzeuge (110) insbesondere in ihrer Verschlussstellung (Verschlussabstand),
Messen einer beim Verschließen eines Clips aufgebrachten Verschlusskraft oder einer dieser proportionalen Größe und das Ausgeben eines die Verschlusskraft oder die proportionale Größe repräsentierenden Messwerts,
**gekennzeichnet durch** das Erzeugen und Ausgeben eines Ruhepositionswerts, welcher die Ruhelage des eingestellten Verschließwerkzeugs repräsentiert.

11. Verfahren nach Anspruch 10,
**gekennzeichnet durch** das Vergleichen des Messwerts mit einem ersten ausgewählten Wertebereich und das Speichern des Ereignisses, wenn der Messwert den ersten ausgewählten Wertebereich verlässt.

12. Verfahren nach Anspruch 10 oder 11,
**gekennzeichnet durch** das Vergleichen des Messwerts mit einem zweiten ausgewählten Wertebereich und das Ausgeben eines Steuersignals zum Einstellen der Ruhelage, wenn der Messwert den zweiten ausgewählten Wertebereich verlässt.

13. Verfahren nach einem der Ansprüche 10 bis 12,
**gekennzeichnet durch** das Vergleichen des Messwerts mit einem dritten ausgewählten Wertebereich und das Anhalten der Clipmaschine, wenn der Messwert den dritten ausgewählten Wertebereich verlässt.

14. Verfahren nach einem der Ansprüche 10 bis 13,
**dadurch gekennzeichnet, dass** der erste und/oder zweite und/oder dritte Wertebereich in Abhängigkeit von dem Ruhepositionswert ausgewählt wird.

15. Verfahren nach einem der Ansprüche 10 bis 14,
**dadurch gekennzeichnet, dass** ein Hinweissignal ausgegeben wird, wenn der Messwert einen der ausgewählten Wertebereiche verlässt.

16. Verfahren nach einem der vorstehenden Ansprüche,
**dadurch gekennzeichnet, dass** beim Messen der der Verschlusskraft proportionalen Größe der Federweg einer beim Verschließen des Clips gegen die Verschlusskraft arbeitenden Feder (130) ermittelt und als Messwert ausgegeben wird.

17. Verfahren nach einem der vorstehenden Ansprüche,
**gekennzeichnet durch** das Einlesen einer Produktinformation, wobei die Ruhelage und/oder der erste und/oder zweite und/oder dritte Wertebereich in Abhängigkeit von der eingelesenen Produktinformation eingestellt wird.

## Claims

1. A clip machine (100) having two closing tools which, for the purpose of closing clips, are moveable in relation to one another between an opening position and a closing position, setting means (136) adapted to set a neutral position of a closing tool (110) and thus the spacing of the closing tools (110), in particular in their closing position (closing space), and
a measuring device (128, 220) which is connected to one of the closing tools (110) and is adapted to measure a closing force applied when closing a clip, or a quantity proportional to the closing force, and to output a measured value representative of the closing force, or of the quantity proportional to the closing force,
**characterized by** a position sensor (132, 214) coupled to the adjustable closing tool (110) and adapted to produce and output a neutral position value representative of the neutral position of the adjusted closing tool.

2. A clip machine (100) according to claim 1,
**characterized by** an event data storage (224) and a control system (200) adapted to compare a measured value with a second selected range of values and to log the event in the event data storage (224), if the measured value is beyond the second selected range of values.

3. A clip machine (100) according to claim 1 or 2,
**characterized by** an adjustment drive coupled to the setting means (136), said control system (200) being adapted to compare the measured value with a first selected range of values and to output to the adjustment drive a control signal for establishing the neutral position, if the measured value is beyond the first selected range of values.

4. A clip machine (100) according to any of claims 1 to 3,
**characterized by** the control system (200) being adapted to compare the measured value with a third selected range of values and to stop the clip machine, if the measured value is beyond the third selected range of values.

5. A clip machine (100) according to any of claims 2 to 4,
**characterized in that** the control system (200) comprises a data storage (212) and a selection device (210) for the ranges of values.

6. A clip machine (100) according to claim 5,
**characterized in that** said selection device (210) is adapted to select the first and/or the second and/or the third range of values depending on the neutral position value.

7. A clip machine (100) according to any of claims 2 to 6,
**characterized by** a display device (222) adapted to display the event, if the measured value is beyond the first and/or the second and/or the third selected range of values.

8. A clip machine (100) at least according to claim 1,
**characterized in that** the measuring device (128, 220) comprises a spring (130) coupled to one of the closing tools (110) and counteracting the closing force in the act of closing the clip, and a travel measuring device coupled to the closing tool (110) for measuring the spring travel in the act of closing the clip.

9. A clip machine (100) according to claim 8,
**characterized in that** the travel measuring device is constituted by the position sensor (132, 214) for producing and outputting the neutral position value, coupled to the adjustable closing tool (110), which position sensor is adapted to produce and output an excursion value representative of the spring travel in the act of closing the clip.

10. A method of adjusting a clip machine for the closing of clips with two closing tools (110) moveable in relation to one another between an opening position and a closing position, comprising the steps of
setting the neutral position of one closing tool (110) and thus the spacing of the closing tools (110), in particular in their closing position (closing space);
measuring a closing force applied when closing a clip, or a quantity proportional to it, and outputting a measured value representative of the closing force or the quantity proportional to it,
**characterized by** producing and outputting a neutral position value representative of the neutral position of the adjusted closing tool.

11. A method according to claim 10,
**characterized by** comparing the measured value with a first selected range of values, and storing the event, if the measured value is beyond the first selected range of values.

12. A method according to claim 10 or 11,
**characterized by** comparing the measured value with a second selected range of values, and outputting a control signal for adjusting the neutral position, if the measured value is beyond the second selected range of values.

13. A method according to any of claims 10 to 12,
**characterized by** comparing the measured value with a third selected range of values, and stopping the clip machine, if the measured value is beyond the third selected range of values.

14. A method according to any of claims 10 to 13,
**characterized in that** the first and/or second and/or third range of values is selected depending on the neutral position value.

15. A method according to any of claims 10 to 14,
**characterized in that** an information signal is output when the measured value is beyond one of the selected ranges of values.

16. A method according to any of the above claims,
**characterized in that**, when measuring the quantity proportional to the closing force, the spring travel of a spring (130) counteracting the closure force when closing the clip is determined and output as a measured value.

17. A method according to any of the above claims,
**characterized by** reading in a product information, wherein the neutral position and/or the first and/or the second and/or the third range of values are set depending on the product information read in.

## Revendications

1. Machine (100) d'agrafage ayant deux outils de fermeture qui, pour la fermeture d'agrafes, sont mobiles l'un par rapport à l'autre entre une position d'ouverture et une position de fermeture, comprenant des moyens (136) de réglage conçus pour établir la position de repos d'un outil (110) de fermeture et ainsi la distance entre les outils (110) de fermeture, notamment dans leur position de fermeture (distance de fermeture), et
comprenant un dispositif (128, 220) de mesure, relié à un outil (110) de fermeture et conçu pour mesurer la force de fermeture appliquée lors de la fermeture d'une agrafe ou une grandeur qui lui est proportionnelle et émettre une valeur de mesure représentant la force de fermeture ou la grandeur qui lui est proportionnelle,
**caractérisée par** un capteur (132, 214) de position couplé à l'outil (110) de fermeture réglable et conçu pour produire et émettre une valeur de position de repos, qui représente la position de repos de l'outil de fermeture réglé.

2. Machine (100) d'agrafage suivant la revendication 1,
**caractérisée par** une mémoire (224) de données d'événement et par une commande (200) qui est conçue pour comparer la valeur de mesure à une deuxième plage de valeur sélectionnée et pour prendre acte de l'événement dans la mémoire (224) de données d'événement si la valeur de mesure quitte la deuxième plage de valeur sélectionnée.

3. Machine (100) d'agrafage suivant la revendication 1 ou 2,
**caractérisée par** un entraînement de déplacement, couplé aux moyens (136) de réglage, la commande (200) étant conçue pour comparer la valeur de mesure à une première plage de valeur sélectionnée et émettre vers l'entraînement de déplacement un signal de commande pour régler la position de repos si la valeur de mesure quitte la première plage de valeur sélectionnée.

4. Machine (100) d'agrafage suivant l'une des revendications 1 à 3,
**caractérisée en ce que** la commande (200) est conçue pour comparer la valeur de mesure à une troisième plage de valeur sélectionnée et pour arrêter la machine d'agrafage si la valeur de mesure quitte la troisième plage de valeur sélectionnée.

5. Machine (100) d'agrafage suivant l'une des revendications 2 à 4,
**caractérisée en ce que** la commande (200) a une mémoire (212) de données et un dispositif (210) de sélection des plages de valeur.

6. Machine (100) d'agrafage suivant la revendication 5,
**caractérisée en ce que** le dispositif (210) de sélection est conçu pour sélectionner la première et/ou la deuxième et/ou la troisième plage de valeur en fonction de la valeur en la position de repos.

7. Machine (100) d'agrafage suivant l'une des revendications 2 à 6,
**caractérisée par** un dispositif (222) d'affichage, qui est conçu pour afficher l'événement si la valeur de mesure quitte la première plage et/ou la deuxième plage et/ou la troisième plage de valeur sélectionnée.

8. Machine (100) d'agrafage suivant la revendication 1,
**caractérisée en ce que** le dispositif (128, 220) de mesure a un ressort (130) qui est couplé à l'un des outils (110) de fermeture et qui travaille, lors de la fermeture de l'agrafe, à l'encontre de la force de fermeture, et un dispositif de mesure de course, couplé à l'outil (110) de fermeture et mesurant la course élastique lors de la fermeture de l'agrafe.

9. Machine (100) d'agrafage suivant la revendication 8,
**caractérisée en ce que** le dispositif de mesure de course est formé pour la production et l'émission de la valeur de la position de repos par le capteur (132, 214) de position couplé à l'outil (110) de fermeture réglable et est conçu pour produire et émettre une valeur de déviation représentant la course élastique lors de la fermeture de l'agrafe.

10. Procédé d'installation d'une machine d'agrafage pour la fermeture d'agrafes au moyen de deux outils (110) de fermeture, qui sont mobiles l'un par rapport à l'autre entre une position d'ouverture et une position de fermeture, comprenant les stades dans lesquels
on établit la position de repos d'un outil (110) de fermeture et ainsi la distance entre les outils (110) de fermeture, notamment dans leur position de fermeture (distance de fermeture),
on mesure une force de fermeture appliquée lors de la fermeture d'une agrafe ou une grandeur qui lui est proportionnelle et on émet une valeur de mesure représentant la force de fermeture ou la grandeur proportionnelle,
**caractérisé par** la production et l'émission d'une valeur de la position de repos, qui représente la position de repos de l'outil de fermeture réglé.

11. Procédé suivant la revendication 10,
**caractérisé par** la comparaison de la valeur de mesure à une première plage de valeur sélectionnée et par la mémorisation de l'événement si la valeur de mesure quitte la première plage de valeur sélectionnée.

12. Procédé suivant la revendication 10 ou 11,
**caractérisé par** la comparaison de la valeur de mesure à une deuxième plage de valeur sélectionnée et par l'émission d'un signal de commande pour établir la position de repos si la valeur de mesure quitte la deuxième plage de valeur sélectionnée.

13. Procédé suivant l'une des revendications 10 à 12,
**caractérisé par** la comparaison de la valeur de mesure à une troisième plage de valeur sélectionnée et par l'arrêt de la machine d'agrafage si la valeur de mesure quitte la troisième plage de valeur sélectionnée.

14. Procédé suivant l'une des revendications 10 à 13,
**caractérisé en ce que** l'on choisit la première et/ou la deuxième et/ou la troisième plage de valeur en fonction de la valeur de la position de repos.

15. Procédé suivant l'une des revendications 10 à 14,
**caractérisé en ce que** l'on émet un signal d'avertissement lorsque la valeur de mesure quitte l'une des plages de valeur sélectionnées.

16. Procédé suivant l'une des revendications précédentes,
**caractérisé en ce que** l'on détermine, lors de la mesure, la valeur, proportionnelle à la force de fermeture, de la course élastique d'un ressort (130) travaillant lors de la fermeture de l'agrafe à l'encontre de la force de fermeture et on l'émet en tant que valeur de mesure.

17. Procédé suivant l'une des revendications précédentes,
**caractérisé par** la lecture d'une information de produit, dans lequel on règle la position de repos et/ou la première et/ou la deuxième et/ou la troisième plage de valeur en fonction de l'information de produit, qui est lue.
